(19) **Europäisches Patentamt / European Patent Office / Office européen des brevets**

(11) **EP 3 428 222 B1**

(12) # EUROPEAN PATENT SPECIFICATION

(45) Date of publication and mention of the grant of the patent:
**26.02.2020 Bulletin 2020/09**

(21) Application number: **17900276.1**

(22) Date of filing: **17.07.2017**

(51) Int Cl.:
*C08J 5/18* (2006.01)        *C08K 3/22* (2006.01)
*C08K 5/1545* (2006.01)

(86) International application number:
**PCT/CN2017/093193**

(87) International publication number:
**WO 2018/201616 (08.11.2018 Gazette 2018/45)**

(54) **METHOD FOR USE IN PREPARING INTELLIGENT CHROMOGENIC ANTIBACTERIAL ANTI-OXIDATION PROTECTIVE FILM**

VERFAHREN ZUR VERWENDUNG BEI DER HERSTELLUNG EINER INTELLIGENTEN CHROMOGENEN ANTIBAKTERIELLEN ANTIOXIDATIVEN SCHUTZFOLIE

PROCÉDÉ DESTINÉ À ÊTRE UTILISÉ LORS DE LA PRÉPARATION D'UN FILM PROTECTEUR ANTIOXYDANT ANTIBACTÉRIEN CHROMOGÈNE INTELLIGENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2017 CN 201710301118**

(43) Date of publication of application:
**16.01.2019 Bulletin 2019/03**

(73) Proprietor: **Shanghai Ocean University**
**Shanghai 201306 (CN)**

(72) Inventors:
• **XIE, Jing**
  **Shanghai 201306 (CN)**
• **TANG, Zhipeng**
  **Shanghai 201306 (CN)**
• **CHEN, Chenwei**
  **Shanghai 201306 (CN)**
• **WANG, Jinfeng**
  **Shanghai 201306 (CN)**
• **ZHANG, Yuhan**
  **Shanghai 201306 (CN)**

(74) Representative: **Vitina, Maruta et al**
**Agency TRIA ROBIT**
**P.O. Box 22**
**1010 Riga (LV)**

(56) References cited:
CN-A- 104 718 272        CN-A- 104 987 635
CN-A- 105 694 320        CN-A- 105 924 864
CN-A- 106 133 034        JP-A- H09 221 555

• **VALDIR ANICETO PEREIRA ET AL: "Active chitosan/PVA films with anthocyanins from Brassica oleraceae (Red Cabbage) as Time-Temperature Indicators for application in intelligent food packaging", FOOD HYDROCOLLOIDS, vol. 43, 2 June 2014 (2014-06-02), pages 180-188, XP055573017, NL ISSN: 0268-005X, DOI: 10.1016/j.foodhyd.2014.05.014**
• **IRYATIE ISHAK ET AL: "DEVELOPMENT OF PURPLE SWEET POTATO STARCH BASE BIODEGRADABLE FILM", JURNAL TEKNOLOGI, vol. 77, no. 31, 20 December 2015 (2015-12-20), pages 75-78, XP055572861, Malaysia ISSN: 0127-9696, DOI: 10.11113/jt.v77.6914**
• **MOHD A. MARSIN ET AL: "Preparation and Characterization of Purple Sweet Potato Starch-Based Edible Film with Optimized Mixing Temperature", JOURNAL OF ADVANCED RESEARCH IN MATERIALS SCIENCE, vol. 69, 1 April 2016 (2016-04-01), pages 1-10, XP055572491, DOI: 10.1016/j.asoc.2018.03.041**

**Description**

**TECHNICAL FIELD**

The present invention relates to food packaging materials, and more particularly to a method for preparing an intelligent antibacterial and antioxidative film.

**BACKGROUND**

Nutrition in food is reduced because of food spoilage and deterioration, and shelf life of food is thus shortened. Active packaging technology has been widely applied in recent years. Antibacterial agents or antioxidants are directly added to or coated on plastic films to form the films with antibacterial and antioxidative properties. The films are effective in inhibiting the reproduction and growth of microorganisms by releasing active substances to food during storage, thus protecting food from oxidation and spoilage and prolonging the shelf life of food. However, when food is packaged with films, it is difficult to observe whether the food has spoiled, so that the food cannot be disposed timely. Therefore, there is a need to develop a film which shows a different color when the food begins to spoil.

Purple sweet potato cyanidin (PSPC) is an anthocyanin naturally extracted from root tubers, stems and leaves of purple sweet potato. PSPC, as a desirable natural edible pigment resource with bright color, is free of toxicity and special odor, and plays a role in nutrition, pharmacology and health care, such as antimutation, antioxidation, alleviation of liver dysfunction, anti-hyperglycemia. Moreover, PSPC may change colors under acidic or base environment, indicating red in the case of acid and blue in the case of base.

Nano-$TiO_2$ has been widely used in pharmaceutical, cosmetic, food and packaging applications due to its high stability and self-cleaning, self-sterilization, photocatalyst and antimicrobial properties. Moreover, $TiO_2$ has higher band-gap energy upon irradiation with visible light or ultraviolet light due to its photocatalytic activity, and electron-hole pairs are generated on the surfaces of $TiO_2$ particles. The electron-hole pairs can induce redox reactions to kill bacteria or inhibit the growth of bacteria.

Polyvinyl alcohol (PVA) is a water-soluble polymer which is used in a wide range of applications. PVA possesses strong adhesion, smoothness, gas barrier property, abrasion resistance, and water resistance upon waterproof treatment. In addition, PVA is subjected to a complete biodegradation by microorganisms in nature after it has been used. Therefore, PVA is generally adopted as a base material for packaging with extensive applications in food packaging field. There have been studies on films which are prepared using anthicyanin as a color-developing material. However, there are no reports on preparing an intelligent antibacterial and antioxidative film by combining nano-$TiO_2$ and PSPC with PVA as a base material.

Valdir Aniceto Pereira et al. in the publication "Active chitosan/PVA films with anthocyannis from Brassica oleraceae (Red Cabbage) as Time-Temperature Indicators for application in intelligent food packaging", FOOD HYDROCOLLOIDS, vol 43, 2 June 2014, pages 180-188. XP055573017, disclose a method for preparing an intelligent food packaging film including: (i) preparing a polyvinyl alcohol (PVA)/chitosan/anthocyanin hydrogel, (ii) casting the blend onto a glass plate, (iii) drying the plate in an oven to obtain a PVA/chitosan/anthocyanin film. Valdir et al state that the changes in color of the film provides a cheap and simple way to indicate that a food has undergone changes in its chemical composition, the color shift resulting from changes in the pH of the contents that occur when food is spoiled. In addition, they disclose that inorganic metal particles can be incorporated into the film in order to improve features such as antimicrobial activity and antioxidant activity.

Iryatie Ishak et al. in the publication "Development of purple sweet potato starch base biodegradable film", JURNAL TEKNOLOGI, vol 77, no. 31, 20 December 2016, pages 75-78, XP055572861, an antioxidant edible film based on purple sweet potato starch plasticized with glycerol and incorporated with purple sweet potato anthocyanin as an antioxidant source. The film is prepared by casting method, and Iryatie et al further show the color changes of purple sweet potato anthocyanin at different pH values.

CN 105 694 320 A (Univ South China Agricult) published on 22 June 2016 discloses a method of preparing an antimicrobial film including: (i) preparing a polyvinyl alcohol solution, (ii) adding a nano-Ti02 solution, (iii) adding a plant extract (Eupatorium adenophorum), (iv) mixing the solution, (v) casting the blend onto a glass plate and (vi) drying.

Mohd A Marsin et al. in the publication "Preparation and Characterization of purple sweet potato starch-based edible film with optimized mixing temperature", JOURNAL OF ADVANCED RESEARCH IN MATERIALS EWSEARCH, vol.69, 16 April 2016, pages 1-10, XP055572491, disclose an edible starch film including purple sweet potato (PSP) starch, glycerol as plasticizer and kappa carrageenan as gelling agent contains more than 15% starches in producing edible film due to its functional antioxidant properties.

**EP 3 428 222 B1**

## SUMMARY

The present invention is to provide a method for preparing an intelligent antibacterial and antioxidative film, including: preparing a PVA solution; adding nano-$TiO_2$ to the PVA solution to obtain a PVA/$TiO_2$ solution; stirring the PVA/$TiO_2$ solution and then casting the PVA/$TiO_2$ solution onto a glass plate; drying the plate in an oven to obtain a PVA/$TiO_2$ film; measuring mechanical performance and antibacterial property of the film to determine an optimal amount of nano-$TiO_2$; preparing a purple sweet potato cyanidin (PSPC) solution and then adding to a solution with an optimal ratio of PVA to nano-$TiO_2$ to produce a blend; and stirring the blend and casting the blend onto a glass plate, and drying the plate in an oven to obtain a PSPC/PVA/$TiO_2$film. The method specifically includes the following steps.

    1) Preparation of PVA solution
    Adding 22g of PVA and 200 ml of deionized water into a vessel; placing the vessel in a counter-pressure boiler under high pressure at 121°C for 40 minutes; and transferring the vessel to a heat collection-constant temperature type magnetic stirrer at 40°C and 50 rpm when a boiler temperature is reduced to 90°C.
    2) Preparation of PVA/$TiO_2$ solution
    3) Preparation of nano-$TiO_2$/PVA film and determination of the optimal amount of nano-$TiO_2$
    Casting the PVA/nano-$TiO_2$ solution onto a 30cm × 30cm glass plate and drying the plate naturally at the room temperature to obtain a film; placing the film in a vacuum oven at 37°C for 5h, and vacuum sealing the film with a high-barrier bag and then placing the bag in a desiccator for use; and determining the optimal addition proportion of nano-$TiO_2$ through mechanical performance and antibacterial property tests.
    4) Preparation of PSPC solution
    Dissolving purple sweet potato cyanidin (PSPC) with 5-10 mL of hydrochloric acid (pH= 3) under stirring at room temperature and 30 rpm for 4 hours to obtain a PSPC solution; and storing the PSPC solution away from light.
    5) Preparation of PSPC/nano-$TiO_2$/PVA film
    Placing the PVA-$TiO_2$ solution on a heat collection-constant temperature type magnetic stirrer at 40°C and 50 rpm; adding the PSPC solution to the PVA-$TiO_2$ solution under stirring and mixing the PSPC solution and the PVA-$TiO_2$ solution for 20 minutes in a water bath to produce a mixture; and subjecting the mixture to ultrasonication for 10 minutes to remove bubbles in the mixture so as to produce a PSPC/$TiO_2$/PVA solution; casting the PSPC/$TiO_2$/PVA solution onto a plate (30cm × 30cm); drying the plate in an oven at 40°C for 12 hours to remove solvents; storing the plate in a desiccator with a saturated sodium bromide solution for 48 hours to obtain a film; removing the film from the plate and vacuum sealing the film with a high-barrier bag and then placing the sealed film in the desiccator for use.

In the present invention the step of preparation of PVA solution, further comprises:

adding 1 ml of glycerol as a plasticizer into the vessel under stirring to produce a PVA solution;
and the step of preparation of PVA/$TiO_2$ solution, further comprises:
placing the PVA mother liquor on a heat collection-constant temperature type magnetic stirrer at 40°C and 50 rpm; adding nano-$TiO_2$ to the PVA mother liquor under stirring in a water bath to produce a blend without aggregation of nanoparticles; stirring the blend for 2 hours to avoid aggregation of nanoparticles; and subjecting the blend to ultrasonication for 10 minutes to remove bubbles in the blend so as to produce a PVA/$TiO_2$ solution.

In an embodiment, the PVA has a degree of polymerization of 1799; and the nano-$TiO_2$ has a particle size of 30 nm.
In an embodiment, a weight (g)-volume (mL) ratio of the nano-$TiO_2$ to the PVA solution in step 2) is 0.5-3:100.
In an embodiment, a weight (g)-volume (mL) ratio of the nano-$TiO_2$ to the PVA solution in step 2) is 1:100.
In an embodiment, a ratio of the PSPC solution to the PVA-$TiO_2$ solution in step 4) is 10-30:100 by volume.
In an embodiment, a ratio of the PSPC solution to the PVA-$TiO_2$ solution in step 4) is 26:100 by volume.
As compared to the prior art, the present invention provides a process of making film which is easy to control and a PVA solution with appropriate fluidity and viscosity.
In the present invention, the impact of the processes for preparing and storing the PSPC solution is negligible for the antioxidative property and color development of the film.
The heat collection-constant temperature type magnetic stirrer used in the present invention allows for the thorough mixing of PVA and active substances.
The film of the present invention has better mechanical performance than saccharide and protein films. Shelf life of food is thus prolonged thanks to the integration of the antibacterial and antioxidative properties of the film. In addition, the film shows color changes in various pH environments, which enables the observation of rancidification of the packaged food. Specifically, the film is dark red at pH 2. The film exhibits a lighter color as the acidity decreases and becomes pale magenta at pH 7. The film exhibits a darker color as the alkalinity increases and becomes dark blue at pH 11. The film of the present invention is suitable for a wide range of applications in food packaging with color development and antibacterial and antioxidative properties.

## DETAILED DESCRIPTION OF THE PRESENT INVENTION

The present invention will be further described below in conjunction with the embodiments to make the processes and features of the present invention clearer.

PVA with a degree of polymerization of 1799 was purchased from Shanghai Jingxi Chemical Co., Ltd. Nano-TiO$_2$ with a particle size of 30 nm was purchased from Shanghai Maite Chemical Co., Ltd (China). Purple sweet potato anthocyanin was purchased from Hebei Runbu Biotechnology Co., Ltd. The method for preparing the film of the present invention is as follows:

(1) Preparation of PVA solution

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain the PVA solution.

(2) Preparation of PVA-TiO$_2$ solution

The PVA solution was placed in the heat collection-constant temperature type magnetic stirrer at 40°C and 50 rpm. Nano-TiO$_2$ with 0.5-3% of the amount of PVA was added to the PVA solution under magnetic stirring at 50 rpm in a water bath. The nano-TiO$_2$ and the PVA solution were mixed in a water bath for 2 hours to produce a blend without aggregation of nanoparticles. The blend was subjected to ultrasonication for 10 minutes to remove bubbles in the blend. The PVA-TiO$_2$ solution was obtained.

(3) Preparation of TiO$_2$/PVA film and determination of optimal amount of nano-TiO$_2$

The PVA-TiO$_2$ solution was cast onto a 30 cm$\times$30 cm glass plate to air dry at room temperature so as to produce a film. The film was removed from the glass plate and dried in a vacuum oven for 5 hours at 37°C. The film was vacuum sealed with a high-barrier bag and then placed in a desiccator for use. The optimal amount of nano-TiO$_2$ was determined through mechanical performance and antibacterial activity tests.

(4) Preparation of PSPC solution

PSPC was dissolved with 5-10 mL of hydrochloric acid (pH=3) and magnetically stirred at 30 rpm and room temperature for 4 hours to obtain a PSPC solution. The obtained PSPC solution was stored in a conical flask wrapped with aluminum foil away from light. The amount of PSPC was 14-26% of the amount of PVA.

(5) Preparation of PSPC/TiO$_2$/PVA film

The PVA-TiO$_2$ solution was placed in a heat collection-constant temperature type magnetic stirrer at 40°C and 50 rpm. The PSPC solution was added to the PVA-TiO$_2$ solution under magnetic stirring at 50 rpm in a water bath. The PSPC solution and the PVA-TiO$_2$ solution were mixed for 20 minutes in the water bath and then subjected to ultrasonication for 10 minutes to remove bubbles in the solution so as to obtain a PSPC-TiO$_2$-PVA solution. The PSPC-TiO$_2$-PVA solution was cast onto a 30 cm$\times$30 cm glass plate and then dried in an oven for 12 hours at 40°C to remove solvents. The glass plate together with a saturated sodium bromide solution was stored in a desiccator for 48 hours to obtain a film. The film was removed from the glass plate, vacuum sealed with a high-barrier bag and placed in a desiccator for use.

## Tests and Measurements

1. Tensile test

During the test, the film was cut into samples each with a length of about 35 mm and a width of 5 mm. The test was carried out according to GB1040-79 Plastic Tensile Test Method with LRX-PLUS Electronic Material Testing Machine at a speed of 1 mm/s. The tensile strength was calculated by formula (1):

$$T_s = \frac{p}{b+d} \qquad (1)$$

where Ts was the tensile strength (MPa); P was the maximum tension (N); b was the width of the film samples (mm); and d was the thickness of the film samples (mm).

2. Color development test

The film samples were cut into 1 cm×1 cm squares, and then immersed in a hydrochloric acid solution (pH=2.0-7.0) and a sodium hydroxide solution (pH=8.0-11.0) for 5 minutes, so as to observe the color changes of the film samples.

3. Antioxidative test

In the dark environment, 3 mg of DPPH was added into 100 mL of absolute methanol to obtain 75 $\mu$mol/L of DPPH-methanol solution. The DPPH-methanol solution was refrigerated at 40 °C for use.

The film samples were cut into 3 cm×3 cm squares and placed in a beaker with 100 mL of distilled water. The beaker was placed in a constant-temperature magnetic stirrer at 25°C and at 150 r/min. 1 mL of sample solution was added to 4 mL of the DPPH-methanol solution (75 $\mu$mol/L). The sample solution and the DPPH-methanol solution were mixed and allowed to stand for 50 minutes away from light. The absorbance at 516 nm was measured by an ultraviolet spectrophotometer after complete scavenging of free radicals. DPPH free radical scavenging rate (%) was expressed by formula (2):

$$\text{DPPH free radical scavenging rate (\%)} = (1 - \frac{A_{sample}}{A_{blank}}) \times 100 \quad (2)$$

where $A_{sample}$ was the absorbance of the sample solution; and $A_{blank}$ was the absorbance of the blank control.

4. Antibacterial test

Preparation of LB culture medium: 1g of peptone, 0.5g of yeast extract, 1g of sodium chloride and 95 mL of distilled water are added to a container. The container was shaken until solutes in the culture medium dissolved. The pH was adjusted to 7.4 with 5 mol/L of NaOH. The culture medium was diluted to 100 mL with distilled water, which was charged in a flask and sterilized at 125°C for 25 minutes.

Preparation of a potato solid culture medium: 20g of peeled potato was cut into blocks and then added to 100 mL of distilled water. The potato blocks are boiled for 30 minutes (controlling the heat and adding water when needed). Then, the boiled potato blocks were filtered with gauze to produce a filtrate. 2g of sucrose and 2g of agar were added to the filtrate. The filtrate was kept at a natural pH (about 6.0) and diluted to 100 mL with distilled water, which was charged in a flask and sterilized at 125°C for 25 minutes.

Enrichment culture of *Escherichia coli*: The strain was inoculated to a LB culture medium in a sterile room, and cultured in a full-temperature incubator shaker for 16 hours at 38°C while shaking at 100 r/min.

Inhibition zone test: The cultured *Escherichia coli* was inoculated to the surface of the sterilized potato solid medium with an inoculating loop and uniformly cast on the surface. The sample film was shaped into several small rounds each with a diameter of 1 cm by a puncher. The small round films are placed on a flat plate and closely adhered onto the culture medium. The culture medium was covered with a lid and cultured in a constant-temperature and humidity incubator at 38°C for 20 hours. The presence or absence of the inhibition zone was observed and recorded.

**Example 1**

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain a PVA solution.

The PVA solution was placed in the heat collection-constant temperature type magnetic stirrer at 40°C and 50 rpm. Nano-$TiO_2$ with 0.5% of the amount of PVA was then added to the PVA solution under magnetic stirring at 50 rpm in a water bath. The nano-$TiO_2$ and the PVA solution were mixed in a water bath for 2 hours to produce a blend without aggregation of nanoparticles. The blend was subjected to ultrasonication for 10 minutes to remove bubbles in the blend. The PVA-$TiO_2$ solution was obtained.

The PVA-$TiO_2$ solution was cast onto a 30 cm×30 cm glass plate to air dry at room temperature so as to produce a film. The film was removed from the glass plate and dried in a vacuum oven for 5 hours at 37°C. The film was vacuum sealed with a high-barrier bag and then placed in a desiccator for use.

The tensile strength and the antibacterial property of the $TiO_2$/PVA film were measured. Results for tensile strength and antibacterial properties of the film are shown in Tables 1 and 2, respectively.

## Example 2

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain a PVA solution.

The PVA solution was placed in the heat collection-constant temperature type magnetic stirrer at 40°C and 50 rpm. Nano-$TiO_2$ with 1% of the amount of PVA was then added to the PVA solution under magnetic stirring at 50 rpm in a water bath. The Nano-$TiO_2$ and the PVA solution were mixed in a water bath for 2 hours to produce a blend without aggregation of nanoparticles. The blend was subjected to ultrasonication for 10 minutes to remove bubbles in the blend. The PVA-$TiO_2$ solution was obtained.

The PVA-$TiO_2$ solution was cast onto a 30 cm×30 cm glass plate to air dry at room temperature so as to produce a film. The film was removed from the glass plate and dried in a vacuum oven for 5 hours at 37°C. The film was vacuum sealed with a high-barrier bag and then placed in a desiccator for use.

The tensile strength and the antibacterial property of the $TiO_2$/PVA film were measured. Results for tensile strength and antibacterial properties of the film are shown in Tables 1 and 2, respectively.

## Example 3

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain a PVA solution.

The PVA solution was placed in the heat collection-constant temperature type magnetic stirrer at 40°C and 50 rpm. Nano-$TiO_2$ with 2% of the amount of PVA was then added to the PVA solution under magnetic stirring at 50 rpm in a water bath. The Nano-$TiO_2$ and the PVA solution were mixed in a water bath for 2 hours to produce a blend without aggregation of nanoparticles. The blend was subjected to ultrasonication for 10 minutes to remove bubbles in the blend. The PVA-$TiO_2$ solution was obtained.

The PVA-$TiO_2$ solution was cast onto a 30 cm×30 cm glass plate to air dry at room temperature so as to produce a film. The film was removed from the glass plate and dried in a vacuum oven for 5 hours at 37°C. The film was vacuum sealed with a high-barrier bag and then placed in a desiccator for use.

The tensile strength and the antibacterial property of the $TiO_2$/PVA film were measured. Results for tensile strength and antibacterial properties of the film are shown in Tables 1 and 2, respectively.

## Example 4

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain a PVA solution.

The PVA solution was placed in the heat collection-constant temperature type magnetic stirrer at 40°C and 50 rpm. Nano-$TiO_2$ with 3% of the amount of PVA was then added to the PVA solution under magnetic stirring at 50 rpm in a water bath. The Nano-$TiO_2$ and the PVA solution were mixed in a water bath for 2 hours to produce a blend without aggregation of nanoparticles. The blend was subjected to ultrasonication for 10 minutes to remove bubbles in the blend. The PVA-$TiO_2$ solution was obtained.

The PVA-$TiO_2$ solution was cast onto a 30 cm×30 cm glass plate to air dry at room temperature so as to produce a film. The film was removed from the glass plate and dried in a vacuum oven for 5 hours at 37°C. The film was vacuum sealed with a high-barrier bag and then placed in a desiccator for use.

The tensile strength and the antibacterial property of the $TiO_2$/PVA film were measured. Results for tensile strength and antibacterial properties of the film are shown in Tables 1 and 2, respectively.

## Example 5

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain the PVA solution.

The PVA solution was placed in the heat collection-constant temperature type magnetic stirrer at 40°C and 50 rpm. Nano-$TiO_2$ with 1% of the amount of PVA was then added to the PVA solution under magnetic stirring at 50 rpm in a water bath. The Nano-$TiO_2$ and the PVA solution were mixed in a water bath for 2 hours to produce a blend without aggregation of nanoparticles. The blend was subjected to ultrasonication for 10 minutes to remove bubbles in the blend. The PVA-$TiO_2$ solution was obtained.

PSPC was dissolved with 5.5 mL of hydrochloric acid (pH=3) and magnetically stirred for 4 hours at 30 rpm and at room temperature to obtain a PSPC solution. The obtained PSPC solution was stored in a conical flask wrapped with aluminum foil away from light. The amount of PSPC was 14% of the amount of PVA.

The PVA-$TiO_2$ solution was placed in a heat collection-constant temperature type magnetic stirrer at 40°C and 50 rpm. The PSPC solution was added to the PVA-$TiO_2$ solution under magnetic stirring at 50 rpm in a water bath. The PSPC solution and the PVA-$TiO_2$ solution were mixed for 20 minutes in the water bath and then subjected to ultrasonication for 10 minutes to remove bubbles in the solution so as to obtain a PSPC-$TiO_2$-PVA solution. The PSPC-$TiO_2$-PVA solution was cast onto a 30 cm×30 cm glass plate and then dried in an oven for 12 hours at 40°C to remove solvents. The glass plate together with a saturated sodium bromide solution was stored in a desiccator for 48 hours to obtain a film. The film was removed from the glass plate, vacuum sealed with a high-barrier bag, and placed in a desiccator for use.

The color development and the antioxidative property of the PSPC/Ti02/PVA film were measured. Results for color development and the antioxidative properties of the film are shown in Tables 3 and 4, respectively.

## Example 6

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain the PVA solution.

The PVA solution was placed in the heat collection-constant temperature type magnetic stirrer at 40°C and 50 rpm. Nano-$TiO_2$ with 1% of the amount of PVA was then added to the PVA solution under magnetic stirring at 50 rpm in a water bath. The Nano-$TiO_2$ and the PVA solution were mixed in a water bath for 2 hours to produce a blend without aggregation of nanoparticles. The blend was subjected to ultrasonication for 10 minutes to remove bubbles in the blend. The PVA-$TiO_2$ solution was obtained.

PSPC was dissolved with 6.5 mL of hydrochloric acid (pH=3) and magnetically stirred for 4 hours at 30 rpm and at room temperature to obtain a PSPC solution. The obtained PSPC solution was stored in a conical flask wrapped with aluminum foil away from light. The amount of PSPC was 18% of the amount of PVA.

The PVA-$TiO_2$ solution was placed in a heat collection-constant temperature type magnetic stirrer at 40°C and 50 rpm. The PSPC solution was added to the PVA-$TiO_2$ solution under magnetic stirring at 50 rpm in a water bath. The PSPC solution and the PVA-$TiO_2$ solution were mixed for 20 minutes in the water bath and then subjected to ultrasonication for 10 minutes to remove bubbles in the solution so as to obtain a PSPC-$TiO_2$-PVA solution. The PSPC-$TiO_2$-PVA solution was cast onto a 30 cm×30 cm glass plate and then dried in an oven for 12 hours at 40°C to remove solvents. The glass plate together with a saturated sodium bromide solution was stored in a desiccator for 48 hours to obtain a film. The film was removed from the glass plate, vacuum sealed with a high-barrier bag, and placed in a desiccator for use.

The color development and the antioxidative properties of the PSPC/$TiO_2$/PVA film were measured. Results for color development and the antioxidative property of the film are shown in Tables 3 and 4, respectively.

## Example 7

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain the PVA solution.

The PVA solution was placed in the heat collection-constant temperature type magnetic stirrer at 40°C and 50

rpm. Nano-TiO$_2$ with 1% of the amount of PVA was then added to the PVA solution under magnetic stirring at 50 rpm in a water bath. The Nano-TiO$_2$ and the PVA solution were mixed in a water bath for 2 hours to produce a blend without aggregation of nanoparticles. The blend was subjected to ultrasonication for 10 minutes to remove bubbles in the blend. The PVA-TiO$_2$ solution was obtained.

PSPC was dissolved with 7.5 mL of hydrochloric acid (pH=3) and magnetically stirred for 4 hours at 30 rpm and at room temperature to obtain a PSPC solution. The obtained PSPC solution was stored in a conical flask wrapped with aluminum foil away from light. The amount of PSPC was 22% of the amount of PVA.

The PVA-TiO$_2$ solution was placed in a heat collection-constant temperature type magnetic stirrer at 40°C and 50 rpm. The PSPC solution was added to the PVA-TiO$_2$ solution under magnetic stirring at 50 rpm in a water bath. The PSPC solution and the PVA-TiO$_2$ solution were mixed for 20 minutes in the water bath and then subjected to ultrasonication for 10 minutes to remove bubbles in the solution so as to obtain a PSPC-TiO$_2$-PVA solution. The PSPC-TiO$_2$-PVA solution was cast onto a 30 cm×30 cm glass plate and then dried in an oven for 12 hours at 40°C to remove solvents. The glass plate together with a saturated sodium bromide solution was stored in a desiccator for 48 hours to obtain a film. The film was removed from the glass plate, vacuum sealed with a high-barrier bag, and placed in a desiccator for use.

The color development and the antioxidative properties of the PSPC-TiO$_2$-PVA film were measured. Results for color development and the antioxidative property of the film are shown in Tables 3 and 4, respectively.

## Example 8

22g of PVA was added in a beaker to which 200 mL of deionized water was then added. The beaker was placed in a counter-pressure boiler under high pressure at 121°C for 40 minutes. The beaker was transferred to a heat collection-constant temperature type magnetic stirrer at 40°C when the boiler temperature is reduced to 90°C. 1 mL of glycerol as a plasticizer was then added into the beaker by a pipette under magnetic stirring at 50 rpm in a water bath to obtain the PVA solution.

The PVA solution was placed in the heat collection-constant temperature type magnetic stirrer at 40°C and 50 rpm. Nano-TiO$_2$ with 1% of the amount of PVA was then added to the PVA solution under magnetic stirring at 50 rpm in a water bath. The Nano-TiO$_2$ and the PVA solution were mixed in a water bath for 2 hours to produce a blend without aggregation of nanoparticles. The blend was subjected to ultrasonication for 10 minutes to remove bubbles in the blend. The PVA-TiO$_2$ solution was obtained.

PSPC was dissolved with 8.5 mL of hydrochloric acid (pH=3) and magnetically stirred for 4 hours at 30 rpm and at room temperature to obtain a PSPC solution. The obtained PSPC solution was stored in a conical flask wrapped with aluminum foil away from light. The amount of PSPC was 26% of the amount of PVA.

The PVA-TiO$_2$ solution was placed in a heat collection-constant temperature type magnetic stirrer at 40°C and 50 rpm. The PSPC solution was added to the PVA-TiO$_2$ solution under magnetic stirring at 50 rpm in a water bath. The PSPC solution and the PVA-TiO$_2$ solution were mixed for 20 minutes in the water bath and then subjected to ultrasonication for 10 minutes to remove bubbles in the solution so as to obtain a PSPC-TiO$_2$-PVA solution. The PSPC-TiO$_2$-PVA solution was cast onto a 30 cm×30 cm glass plate and then dried in an oven for 12 hours at 40°C to remove solvents. The glass plate together with a saturated sodium bromide solution was stored in a desiccator for 48 hours to obtain a film. The film was removed from the glass plate, vacuum sealed with a high-barrier bag, and placed in a desiccator for use.

The color development and the antioxidative property of the PSPC/Ti0$_2$/PVA film were measured. Results for color development and the antioxidative property of the film are shown in Tables 3 and 4, respectively.

Table 1: Tensile Performance of PVA Films with Different Amounts of Nano-TiO$_2$

| Films | Amount of Nano-TiO$_2$ (g) | Tensile Strength (MPa) |
|---|---|---|
| TiO$_2$/PVA | 0.11 | 28.7 |
| TiO$_2$/PVA | 0.22 | 35.1 |
| TiO$_2$/PVA | 0.44 | 31.4 |
| TiO$_2$/PVA | 0.66 | 29.7 |

Table 2: Antibacterial Property of PVA Films with Different Amounts of Nano-TiO$_2$

| Films | Amount of Nano-TiO$_2$ (g) | Presence of Inhibition Rate |
|---|---|---|
| TiO$_2$/PVA | 0.11 | Yes |

(continued)

| Films | Amount of Nano-TiO$_2$ (g) | Presence of Inhibition Rate |
|---|---|---|
| TiO$_2$/PVA | 0.22 | Yes |
| TiO$_2$/PVA | 0.44 | Yes |
| TiO$_2$/PVA | 0.66 | Yes |

Table 3: Color Development of TiO$_2$/PVA Films with Different Amounts of PSPC

| Examples | pH | | | | | |
|---|---|---|---|---|---|---|
| | 2 | 3 | 4-6 | 7 | 8-10 | 11 |
| Example 5 | Dark red | Light red | Light pink | Pale violet red | Blue | Dark blue |
| Example 6 | Dark red | Light red | Light pink | Pale violet red | Blue | Dark blue |
| Example 7 | Dark red | Light red | Light pink | Pale violet red | Blue | Dark blue |
| Example 8 | Dark red | Light red | Light pink | Pale violet red | Blue | Dark blue |

Table 4: Antioxidative Property of PVA/nano-Ti02 Films with Different Amounts of PSPC

| Films | Amount of Nano-TiO$_2$ (g) | Amount of PSPC (g) | DPPH free radical scavenging rate (%) |
|---|---|---|---|
| PSPC/TiO$_2$/PVA | 0.22 | 3.08 | 50.4 |
| PSPC/TiO$_2$/PVA | 0.22 | 3.96 | 61.7 |
| PSPC/TiO$_2$/PVA | 0.22 | 4.84 | 73.2 |
| PSPC/TiO$_2$/PVA | 0.22 | 5.72 | 81.4 |

It can be seen from Table 1 that the tensile strength of the TiO$_2$/PVA film ranges from 28.7-35.1 MPa. The TiO$_2$/PVA film has better mechanical performance compared to saccharide and protein films. Furthermore, the TiO$_2$/PVA film has the optimal mechanical performance when the amount of nano-TiO$_2$ is 1% of the amount of PVA. The presence of inhibition zone through the inhibition zone test, as shown in Table 2, indicates that the film has antibacterial properties.

According to Tables 1 and 2, it can be determined that the optimal amount of nano-TiO$_2$ is 1% of the amount of PVA.

It can be known from Table 3 that the PSPC/TiO$_2$/PVA film shows color changes in various pH environments. Specifically, the film is dark red at pH 2. The film exhibits a lighter color as the acidity decreases, and becomes pale red at pH 3, light pink at pH 4-6 and pale magenta at pH 7. The film exhibits a darker color as the alkalinity increases, and becomes blue at pH 8-10 and dark blue at pH 11.

It can be known from Table 4 that as the amount of purple sweet potato anthocyanin increased, the DPPH free radical scavenging rate increased. The TiO$_2$/PVA film has the strongest antioxidative activity when it contains 26% of purple sweet potato anthocyanin; and however, the TiO$_2$/PVA film has the weakest antioxidant activity when it contains 14% of purple sweet potato anthocyanin. According to evaluation test on DPPH free radical scavenging capability, PSPC is released from the film to display antioxidative activity, thereby functioning to scavenge DPPH free radicals.

It can be concluded from Tables 1-4 that the film shows excellent mechanical performance and antioxidative property with nano-TiO$_2$ of 1% of the amount of PVA and PSPC of 26% of the amount of PVA. The film also has good antibacterial property and shows color changes.

The intelligent antibacterial and antioxidative film of the present invention has better mechanical performance than ordinary films. Furthermore, the shelf life of food may be greatly prolonged and the food rancidification may be monitored intelligently owing to the combination of the color development and antibacterial and antioxidative properties of the film. Therefore, the film has a wide range of applications in food packaging.

The film of the present invention has better mechanical performance compared to the saccharide and protein films. Shelf life of food is thus prolonged thanks to the integration of the antibacterial and the antioxidative properties of the film. In addition, the film shows color changes in various pH environments. Specifically, the film is dark red at pH 2. The film exhibits a lighter color as the acidity decreases and becomes pale magenta at pH 7. The film exhibits a darker color as the alkalinity increases and becomes dark blue at pH 11. The film of the present invention is suitable for a wide range of applications in food packaging with combination of color development and antibacterial and antioxidative properties.

**Claims**

1. A method for preparing an intelligent antibacterial and antioxidative film, comprising:

preparing a polyvinyl alcohol (PVA) solution; adding nano-$TiO_2$ into the PVA solution to obtain a PVA/$TiO_2$ solution;
stirring the PVA/$TiO_2$ solution and casting the PVA/$TiO_2$ solution onto a glass plate, and drying the plate in an oven to obtain a PVA/$TiO_2$ film;
measuring a mechanical performance and an antibacterial performance of the film to determine an optimal mixing proportion of PVA and nano-$TiO_2$;
preparing a purple sweet potato cyanidin (PSPC) solution; adding the PSPC solution in a solution with the optimal mixing proportion of PVA and nano-$TiO_2$ to produce a blend; stirring the blend, then casting the blend onto the glass plate; and drying the plate in an oven to obtain a PSPC/$TiO_2$/PVA film; and the method further comprises:

1) preparation of PVA solution
adding 22g of PVA and 200 ml of deionized water into a vessel; placing the vessel in a counter-pressure boiler under high pressure at 121°C for 40 minutes; transferring the vessel to a heat collection-constant temperature type magnetic stirrer at 40°C and 50 rpm when a boiler temperature is reduced to 90°C;
2) preparation of PVA/$TiO_2$ solution
3) preparation of $TiO_2$/PVA film and determination of optimal amount of nano-$TiO_2$
casting the PVA/$TiO_2$ solution onto a 30cm × 30cm glass plate and naturally drying the PVA/$TiO_2$ solution at a room temperature to obtain a film; removing the film and drying the film in a vacuum oven at 37°C for 5 hours; vacuum sealing the film with a high-barrier bag and placing the high-barrier bag in a desiccator for use; and determining an optimal amount of nano-$TiO_2$ by measuring the mechanical performance and the antibacterial property;
4) preparation of PSPC solution
dissolving purple sweet potato cyanidin (PSPC) with 5-10 mL of hydrochloric acid (pH=3) under stirring at room temperature and 30 rpm for 4 hours to obtain a PSPC solution; and storing the PSPC solution away from light; and
5) preparation of PSPC/$TiO_2$/PVA film
placing the PVA-$TiO_2$ solution in a heat collection-constant temperature type magnetic stirrer at 40°C and 50 rpm; adding the PSPC solution to the PVA-$TiO_2$ solution under stirring and mixing the PSPC solution and the PVA-$TiO_2$ solution for 20 minutes to produce a mixture; subjecting the mixture to ultrasonication for 10 minutes to remove bubbles in the mixture so as to produce a PSPC-$TiO_2$-PVA solution; casting the PSPC-$TiO_2$-PVA solution onto a plate; drying the plate in an oven at 40°C for 12 hours to remove solvents; storing the plate in a desiccator with a saturated sodium bromide solution for 48 hours to obtain a film; removing the film from the plate and vacuum sealing the film with a high-barrier bag and then placing the sealed film in the desiccator for use, **characterized in that**,
the step of preparation of PVA solution, further comprises:

adding 1 ml of glycerol as a plasticizer into the vessel under stirring to produce a PVA solution; and the step of preparation of PVA/$TiO_2$ solution, further comprises:
adding nano-$TiO_2$ into the PVA solution under stirring at 40°C and 50 rpm in a heat collection-constant temperature type magnetic stirrer and mixing the nano-$TiO_2$ and the PVA solution in a water bath for 2 hours to produce a blend without aggregation of nanoparticles; and subjecting the blend to ultrasonication for 10 minutes to remove bubbles in the blend so as to produce a PVA-$TiO_2$ solution.

2. The method of claim 1, **characterized in that**, in step 2) an amount of the nano-$TiO_2$ is 0.5%-3% of an amount of the PVA.

3. The method of claim 1, **characterized in that**, in step 2) an amount of the nano-$TiO_2$ is 1% of an amount of the PVA.

4. The method of claim 1, **characterized in that**, in step 4) an amount of the PSPC is 20%-30% of an amount of the PVA.

5. The method of claim 1, **characterized in that**, in step 4) an amount of the PSPC is 26% of an amount of the PVA.

**Patentansprüche**

1. Verfahren zum Herstellen einer intelligenten antibakteriellen und antioxidativen Folie, umfassend:

Herstellen einer Polyvinylalkohol (PVA)-Lösung; Zugeben von Nano-$TiO_2$ in der Polyvinylalkohol-Lösung, um eine PVA-Nano-$TiO_2$-Lösung zu erhalten;
Rühren der PVA-$TiO_2$-Lösung und Giessen der PVA-$TiO_2$-Lösung auf eine Glasplatte, und Trocknen der Glasplatte in einem Ofen um eine PVA-$TiO_2$-Folie zu erhalten;
Messen der mechanischen Leistung und der antibakteriellen Leistung der Folie, um ein optimales Mischungsverhältnis von PVA und Nano-$TiO_2$ festzustellen;
Herstellen einer purpurroten Süßkartoffel-Cyanidin (PSPC)-Lösung; Zugeben der PSPC-Lösung in einer Lösung mit dem optimalen Mischungsverhältnis von PVA und Nano-$TiO_2$; vollständiges Rühren, anschließendes Gießen der Mischlösung auf die Glasplatte und Trocknen in einem Ofen, um eine PSPC/$TiO_2$/PVA-Folie zu erhalten; wobei das Verfahren weiter folgende Schritte umfasst:

1) Herstellen einer PVA-Lösung
Zugeben von 22 g PVA und 200 ml entionisiertem Wasser in einem Behälter; Platzieren des Behälters in einem Gegendruckkessel unter hohem Druck bei 121°C für 40 Minuten; Herausnehmen und Platzieren des Behälters in einem Wärmesammel-Konstanttemperaturerwärmungs-Magnetrührer bei 40°C und dem Drehzahl 50 U/min, nachdem die Kesseltemperatur sich auf 90°C verringert;
2) Herstellen einer PVA-$TiO_2$-Lösung;
3) Herstellen einer $TiO_2$/PVA-Folie und Feststellen einer optimalen Menge von Nano-$TiO_2$
Giessen der PVA-$TiO_2$-Lösung auf eine Glasplatte von 30cm×30cm und natürliches Trocknen bei Raumtemperatur, um eine Folie zu erhalten; Herausnehmen der Folie und Einlegen dieser in einem Vakuumtrocknungsofen bei 37°C, Trocknen für 5 Stunden, Einpassen der Folie in einem Hochbarrierebeutel und Vakuumversiegeln, anschließendes Einlegen des Hochbarrierebeutels in einen Exsikkator; Feststellen einer optimalen Menge von Nano-$TiO_2$ anhand Messen der mechanischen Leistung und der antibakteriellen Leistung;
4) Herstellen einer purpurroten Süßkartoffel-Cyanidin-Lösung
Lösen von purpurroten Süßkartoffel-Cyanidin (PSPC) mit 5-10 ml Salzsäure (pH=3), Magnetisches Rühren bei Raumtemperatur und dem Drehzahl 30 U/min für 4 Stunden, um eine purpurrote Süßkartoffel-Cyanidin-Lösung zu erhalten; und Aufbewahren der Lösung unter Lichtschutzbedingungen; und
(5) Herstellen einer PSPC/$TiO_2$/PVA-Folie
Platzieren der PVA-$TiO_2$-Lösung in einem Wärmesammel-Konstanttemperaturerwärmungs-Magnetrührer bei 40°C und dem Drehzahl 50 U/min; Zugeben der hergestellten PSPC-Lösung zur PVA-$TiO_2$-Lösung beim Rühren und Mischen der PSPC-Lösung und der PVA-$TiO_2$-Lösung für 20 Minuten, um eine Mischlösung herzustellen; Unterwerfen der Mischlösung einer Ultraschallbehandlung für 10 Minuten, um die Luftblasen in der Mischlösung zu entfernen, um solcherweise eine PSPC-$TiO_2$-PVA-Lösung herzustellen; Giessen der Lösung auf eine Platte; Trocken der Platte in einem Ofen bei 40°C für 12 Stunden, um Lösungsmittel zu entfernen; Lagern der Platte in einem Exsikkator mit der gesättigten Natriumbromidlösung für 48 Stunden, um eine Folie zu erhalten; Herausnehmen der Folie von der Platte, Vakuumversiegeln der Folie in einem Hochbarrierebeutel und dann Platzieren der versiegelten Folie in den Exsikkator zur Verwendung, **dadurch gekennzeichnet, dass**
der Schritt zum Herstellen der PVA-Lösung weiterhin Folgendes umfasst:

Zugeben von 1 ml Glycerin als Weichmacher in dem Behälter unter Rühren, um eine PVA-Lösung herzustellen;
der Schritt zum Herstellen der PVA-$TiO_2$-Lösung weiterhin Folgendes umfasst:
Zugeben von Nano-$TiO_2$ in der PVA-Lösung unter Rühren bei 40°C und dem Drehzahl 50 U/min in dem Wärmesammel-Konstanttemperaturmodus-Magnetrührer und Mischen von Nano-$TiO_2$ und der PVA-Lösung im Wasserbad für 2 Stunden, um eine Mischlösung ohne Aggregation von Nanopartikeln zu erhalten; und Unterwerfen der Mischlösung einer Ultraschallbehandlung für 10 Minuten, um die Luftblasen in der Mischlösung zu entfernen, wodurch eine PVA-$TiO_2$-Lösung hergestellt wird.

**2.** Verfahren nach Anspruch 1, **dadurch gekennzeichnet, dass** im Schritt 2) Nano-TiO$_2$ in einer Menge von 0,5%-3% der Menge von PVA zugegeben wird.

**3.** Verfahren nach Anspruch 1, **dadurch gekennzeichnet, dass** im Schritt 2) Nano-TiO$_2$ in einer Menge von 1% der Menge von PVA zugegeben wird.

**4.** Verfahren nach Anspruch 1, **dadurch gekennzeichnet, dass** im Schritt 4) PSPC in einer Menge von 20%-30% der Menge von PVA zugegeben wird.

**5.** Verfahren nach Anspruch 1, **dadurch gekennzeichnet, dass** im Schritt 4) PSPC in einer Menge von 26% der Menge von PVA zugegeben wird.

**Revendications**

**1.** Procédé de préparation d'un film antibactérien et antioxydant intelligent, le procédé comprenant les étapes consistant à:

préparer une solution d'alcool polyvinylique (PVA); ajouter du nano-TiO$_2$ dans ladite solution PVA pour obtenir une solution PVA/TiO$_2$;
agiter ladite solution PVA/TiO$_2$ et couler ladite solution PVA/TiO$_2$ sur une plaque de verre, et sécher ladite plaque au four pour obtenir un film PVA/TiO$_2$;
mesurer une performance mécanique et une performance antibactérienne dudit film pour déterminer une proportion de mélange optimale de PVA et de nano-TiO$_2$;
préparer une solution des pigments violets de patate douce (PSPC); ajouter ladite solution PSPC dans une solution avec ladite proportion de mélange optimale de PVA et de nano-TiO$_2$ pour produire un mélange; agiter ledit mélange, puis couler ledit mélange sur ladite plaque de verre; et sécher ladite plaque dans un four pour obtenir un film PSPC/TiO$_2$/PVA; et ledit procédé comprend en outre:

1) préparation de ladite solution PVA, comprenant les étapes consistant à:
ajouter 22 g de PVA et 200 ml d'eau désionisée dans un récipient; placer ledit récipient dans une chaudière à contre-pression sous haute pression à 121°C pendant 40 min; transférer ledit récipient dans un agitateur magnétique de type à collecte de chaleur à température constante à 40°C et 50 rpm lorsqu'une température de chaudière est réduite à 90°C;
2) préparation de ladite solution PVA/TiO$_2$
3) préparation dudit film TiO$_2$/PVA et détermination d'une quantité optimale de nano-TiO$_2$, comprenant les étapes consistant à:
couler ladite solution PVA/TiO$_2$ sur une plaque de verre de 30 cm × 30 cm et sécher naturellement ladite solution PVA/TiO$_2$ à température ambiante pour obtenir un film; retirer ledit film et sécher ledit film dans un four à vide à 37°C pendant 5 h; sceller sous vide ledit film avec un sac à haute barrière et placer ledit sac à haute barrière dans un dessiccateur destiné à être utilisé; et déterminer ladite quantité optimale de nano-TiO$_2$ en mesurant les performances mécaniques et la propriété antibactérienne;
4) préparation de ladite solution PSPC, comprenant les étapes consistant à:
dissoudre les pigments violets de patate douce (PSPC) avec 5-10 ml d'acide chlorhydrique (pH=3) sous agitation à température ambiante et 30 rpm pendant 4 h pour obtenir une solution PSPC; et stocker ladite solution PSPC à l'abri de la lumière; et
5) préparation dudit film PSPC/TiO$_2$/PVA, comprenant les étapes consistant à:

placer ladite solution de PVA-TiO$_2$ dans un agitateur magnétique de type à collecte de chaleur à température constante à 40°C et 50 rpm; ajouter ladite solution de PSPC à ladite solution de PVA-TiO$_2$ sous agitation et mélanger ladite solution PSPC et ladite solution PVA-TiO$_2$ pendant 20 min pour produire un mélange; soumettre ledit mélange aux ultrasons pendant 10 min pour éliminer les bulles dans ledit mélange afin de produire une solution PSPC-TiO$_2$-PVA; couler ladite solution PSPC-TiO$_2$-PVA sur une plaque; sécher ladite plaque dans un four à 40°C pendant 12 h pour éliminer les solvants; stocker ladite plaque dans un dessiccateur avec une solution saturée de bromure de sodium pendant 48 h pour obtenir un film; retirer ledit film de ladite plaque et sceller sous vide ledit film avec un sac à haute barrière puis placer ledit film scellé dans ledit dessiccateur destiné à être utilisé, **caractérisé en ce que**,

l'étape de préparation de ladite solution PVA, comprend en outre les étapes consistant à:

ajouter 1 ml de glycérol comme plastifiant dans ledit récipient sous agitation pour produire une solution PVA; et

l'étape de préparation de ladite solution PVA/TiO$_2$, comprend en outre les étapes consistant à: ajouter dudit nano-TiO$_2$ dans ladite solution PVA sous agitation à 40°C et 50 rpm dans un agitateur magnétique de type à collecte de chaleur à température constante et mélanger ledit nano-TiO$_2$ et ladite solution PVA dans un bain-marie pendant 2 h pour produire un mélange sans agrégation de nanoparticules; et soumettre ledit mélange aux ultrasons pendant 10 min pour éliminer les bulles dans ledit mélange afin de produire une solution PVA-TiO$_2$.

2.  Procédé selon la revendication 1, **caractérisé en ce que**, à l'étape 2), une quantité de nano-TiO$_2$ est de 0.5%-3% d'une quantité de PVA.

3.  Procédé selon la revendication 1, **caractérisé en ce que**, à l'étape 2), une quantité de nano-TiO$_2$ est de 1% d'une quantité de PVA.

4.  Procédé selon la revendication 1, **caractérisé en ce que**, à l'étape 4), une quantité de PSPC est de 20%-30% d'une quantité de PVA.

5.  Procédé selon la revendication 1, **caractérisé en ce que**, à l'étape 4), une quantité de PSPC est de 26% d'une quantité de PVA.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 105694320 A

### Non-patent literature cited in the description

- **VALDIR ANICETO PEREIRA et al.** Active chitosan/PVA films with anthocyannis from Brassica oleraceae (Red Cabbage) as Time-Temperature Indicators for application in intelligent food packaging. *FOOD HYDROCOLLOIDS,* 02 June 2014, vol. 43, 180-188

- **IRYATIE ISHAK et al.** Development of purple sweet potato starch base biodegradable film. *JURNAL TEKNOLOGI,* 20 December 2016, vol. 77 (31), 75-78
- **MOHD A MARSIN et al.** Preparation and Characterization of purple sweet potato starch-based edible film with optimized mixing temperature. *JOURNAL OF ADVANCED RESEARCH IN MATERIALS EWSEARCH,* 16 April 2016, vol. 69, 1-10